# EUROPÄISCHE PATENTSCHRIFT

(11) **EP 1 557 649 B1**
(45) Veröffentlichungstag und Bekanntmachung des Hinweises auf die Patenterteilung: **31.07.2013**
(21) Anmeldenummer: 04026745.2
(22) Anmeldetag: 10.11.2004
(51) Int. Cl.: G01D 11/24, G01K 1/08, G01F 15/14, G01K 13/02

(54) **Anschlusskopf für ein Messgerät**
Connector head for measuing device
Tête de raccordement pour un dispositif de mesure

(30) Priorität: 20.01.2004 DE 202004000818 U
(43) Veröffentlichungstag der Anmeldung: 27.07.2005
(73) Patentinhaber: WIKA Alexander Wiegand GmbH & Co.KG, 63911 Klingenberg/Main (DE)
(72) Erfinder: Elter, Herbert, 63874 Dammbach (DE); Ciba, Joachim, 63927 Bürgstadt (DE)
(74) Vertreter: TBK

(56) Entgegenhaltungen:
- DE-U1- 20 116 351
- US-A- 3 405 225
- US-A- 5 052 950

## Beschreibung

Die Erfindung bezieht sich auf einen Anschlusskopf für ein Messgerät oder einen Messumformer mit den Merkmalen des Oberbegriffs von Schutzanspruch 1.

Ein solcher Anschlusskopf ist bekannt (DE 200 14 235 U1, US 3405225, DIN 43729). Er dient dazu, den im Inneren des Anschlusskopfes angeordneten Klemmsockel vor Umgebungseinflüssen wie beispielsweise Schmutz, Staub und Feuchtigkeit zu schützen. Mittels des Klemmsockels können elektrische Leitungen eines Messgeräts oder eines Messumformers verbunden werden mit den Leitern eines elektrischen Kabels, das aus dem Anschlusskopf herausgeführt ist und zur Weiterleitung einer vom Messgerät oder Messumformer gelieferten elektrischen Signalspannung sowie zur Versorgung des Messgeräts oder Messumformers mit elektrischer Speisespannung dient. Gegebenenfalls können innerhalb des Anschlusskopfes zusätzlich zum Klemmsockel elektronische Bauelemente zur Signalaufbereitung angeordnet sein.

Bei dem Messgerät kann es sich um ein Messgerät zur Druckmessung, zur Füllstandsmessung oder zur Temperaturmessung, beispielsweise ein Widerstandsthermometer oder ein Gerät mit Thermoelementen, handeln. Bei dem Messumformer kann es sich beispielsweise um einen Druck-Messumformer handeln. Auf die Art des Messgeräts oder Messumformers kommt es im Rahmen der vorliegenden Erfindung nicht an. Vielmehr ist der erfindungsgemäße Anschlusskopf verwendbar in Verbindung auch mit anderen Messgeräten und Messumformern als den vorstehend beispielhaft genannten.

Das Gehäuse des bekannten Anschlusskopfes besteht aus Gusseisen, Aluminium oder Kunststoff und hat die Form eines Kreiszylinders. Am Boden des kreiszylindrischen Gehäuses ist ein Zapfen angeformt, in dem die Anschlussöffnung ausgebildet ist. Mit dem Zapfen ist der Messumformer oder das Messgerät verbunden, beispielsweise das Heizrohr eines Widerstandsthermometers. Die Deckelöffnung des bekannten Anschlusskopfes liegt in einer Ebene, die mit der Achse der Anschlussöffnung und der Achse des kreiszylindrischen Gehäuses einen spitzen Winkel von beispielsweise 45° oder 60° einschließt, so dass es sich um eine sogenannte "schräge" bzw. "abgeschrägte" Deckelöffnung handelt. Die schräge Deckelöffnung soll die Zugänglichkeit zum Inneren des Gehäuses verbessern und dadurch Arbeiten im Inneren des Gehäuses, beispielsweise während des Verbindens der Leiter des elektrischen Kabels mit dem Klemmsockel, erleichtern.

Am Gehäuse des bekannten Anschlusskopfes ist ein Ringflansch angeformt, der die Deckelöffnung umgibt. Der Deckel des bekannten Anschlusskopfes weist ebenfalls einen Ringflansch auf. Zum Schließen der Deckelöffnung wird der Deckel auf den Ringflansch am Gehäuse gesetzt und werden die Ringflansche beispielsweise mit Hilfe von zwei Schrauben miteinander verschraubt. Mittels der Schrauben sind das Gehäuse und der Deckel lösbar miteinander verbunden. Diese lösbare Verbindung ermöglicht es, den Anschlusskopf zu öffnen, um im Bedarfsfall die am Klemmsockel vorhandenen Leiterverbindungen überprüfen zu können. Bei dem bekannten Anschlusskopf ist die freie Querschnittsfläche der Deckelöffnung deutlich kleiner als die von den Außenumfängen der beiden Ringflansche eingeschlossene Fläche. Dies erschwert es, den bekannten Anschlusskopf kompakt, d.h. mit kleinen Abmessungen, auszubilden, ohne die Zugänglichkeit zum Inneren des Gehäuses einzuschränken. Zudem haben sich die Ringflansche als störend erwiesen, weil sich im Bereich der Ringflansche leicht Verunreinigungen ansammeln können, was insbesondere bei Benutzung des Anschlusskopfes in Anlagen der Nahrungs- und Genussmittelindustrie unerwünscht ist.

Der Erfindung liegt die Aufgabe zugrunde, den gattungsgemäßen Anschlusskopf dahingehend weiterzubilden, dass er bei kompakten Außenabmessungen eine vergleichsweise große Deckelöffnung aufweist, d.h. eine Deckelöffnung mit vergleichsweise großer freier Querschnittsfläche. Zudem soll möglichst erreicht werden, dass der Anschlusskopf eine Gestalt hat, die dem Anhaften von Verunreinigungen vorbeugt.

Diese Aufgabe wird erfindungsgemäß durch den Anschlusskopf gemäß Schutzanspruch 1 gelöst.

Bei dem erfindungsgemäßen Anschlusskopf ist vorgesehen, dass das Gehäuse im Wesentlichen die Form einer Kugelkappe hat, wobei ein dem Rand der Kugelkappe entsprechender Randabschnitt des Gehäuses die Deckelöffnung begrenzt, dass an dem Randabschnitt und entlang demselben ein Gewinde ausgebildet ist, und dass am Deckel ein Gewinde ausgebildet ist, das zu dem Gewinde an dem Randabschnitt komplementär ist und mit diesem in Eingriff bringbar ist, um dadurch den Deckel mit dem Gehäuse lösbar zu verbinden.

Da bei dem erfindungsgemäßen Anschlusskopf das Gehäuse im wesentlichen die Form einer Kugelkappe hat, deren Rand stets kreisförmig ist, ist der die Deckelöffnung begrenzende, dem Rand der Kugelkappe entsprechende Randabschnitt des Gehäuses kreisringförmig. Dies ist bei dem erfindungsgemäßen Anschlusskopf dazu ausgenutzt, entlang dem Randabschnitt ein Gewinde auszubilden. Der Deckel ist mit einem komplementären Gewinde versehen, so dass der Deckel in oder auf den Randabschnitt geschraubt werden kann, um die Deckelöffnung mittels des Deckels zu verschließen. Bei dem Deckel des erfindungsgemäßen Anschlusskopfes handelt es sich somit um einen Schraubdeckel. Die Ringflansche des bekannten Anschlusskopfes können entfallen, wodurch die vorstehend erläuterten, durch die Ringflansche verursachten Nachteile bei dem erfindungsgemäßen Anschlusskopf vermieden werden können.

In vorteilhafter Ausbildung der Erfindung kann vorgesehen sein, dass dann, wenn der Deckel und das Gehäuse lösbar miteinander verbunden sind, die äußere Oberfläche des Deckels und die äußere Oberfläche des Gehäuses im Bereich von dessen Randabschnitt bündig ineinander übergehen, d.h. glatt und ohne Stufen, Toträume und Hinterschneidungen ineinander übergehen.

Ferner kann in vorteilhafter Ausbildung der Erfindung vorgesehen sein, dass die Höhe der Kugelkappe im Wesentlichen gleich dem Radius der der Kugelkappe zugeordneten Kugel ist. Diese Ausbildung ermöglicht eine maximale freie Querschnittsfläche der Deckelöffnung bei zugleich hinreichend großem Volumen des Innenraumes des Gehäuses.

Weitere vorteilhafte Ausgestaltungen der Erfindung sind in den Unteransprüchen definiert und ergeben sich aus der folgenden Beschreibung eines Ausführungsbeispiels der Erfindung, das in der Zeichnung dargestellt ist und im Folgenden näher erläutert wird. Es zeigen:
Figur 1 eine perspektivische Ansicht von schräg oben eines Ausführungsbeispiels des erfindungsgemäßen Anschlusskopfes in Verbindung mit einem Druck-Messumformer;
Figur 2 eine perspektivische Ansicht des Anschlusskopfes gemäß Figur 1, wobei jedoch der Anschlusskopf im geöffneten Zustand ohne seinen Deckel gezeigt ist und der Druck-Messumformer nicht dargestellt ist;
Figur 3 eine Schnittdarstellung des Anschlusskopfes gemäß Figur 1 in einer die Achsen einer Anschlussöffnung und einer Kabelöffnung des Anschlusskopfes enthaltenden Ebene;
Figur 4 eine Schnittdarstellung des Anschlusskopfes gemäß dem Schnitt A-B in Figur 3;
Figur 5 eine Schnittdarstellung von Einzelheiten des Deckels des Ausführungsbeispiels des Anschlusskopfes; und
Figur 6 eine Kugelkappe.

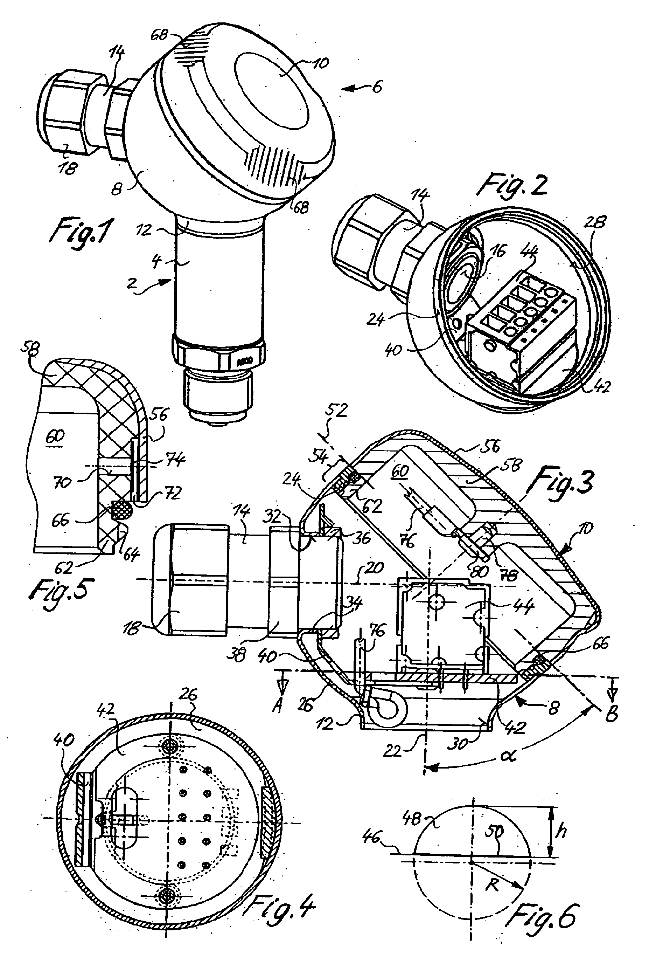

Die in Figur 1 gezeigte Anordnung besteht aus einem Druck-Messumformer 2 mit einem kreiszylindrischen Umformergehäuse 4 und einem Anschlusskopf 6 gemäß dem Ausführungsbeispiel der Erfindung. Der dargestellte Druck-Messumformer 2, auf dessen Ausbildung es für die Erläuterung der vorliegenden Erfindung nicht ankommt und der daher nicht näher beschrieben wird, ist ein Beispiel für einen Messumformer, der mit dem Anschlusskopf 6 verbindbar ist. Der Anschlusskopf 6 kann jedoch auch in Verbindung mit einem anderen als dem dargestellten Messumformer und in Verbindung mit einem Messgerät, beispielsweise einem Temperaturmessgerät, zur Anwendung kommen.

Wie in Figur 1 gezeigt ist, umfasst der Anschlusskopf 6 ein Gehäuse 8 und einen Deckel 10. Am Gehäuse 8 ist ein vom Gehäuse 8 nach außen vorstehender Hals oder Kragen 12 angeformt, mit dem das Umformergehäuse 4 verschweißt ist. Ferner ist am Gehäuse 8 eine Hülse 14 befestigt, durch die eine Axialbohrung 16 (siehe Figur 2) verläuft. Die Axialbohrung 16 kann ein nicht dargestelltes elektrisches Kabel aufnehmen, das in der Axialbohrung mittels einer auf die Hülse 14 geschraubtem Kabelsicherungsmutter 18 abgedichtet fixiert werden kann.

Figur 3 zeigt einen Schnitt durch den Anschlusskopf 6, wobei die Ebene des Schnittes, die zugleich die Zeichenebene von Figur 3 ist, derart gelegt ist, dass in dieser Ebene die Achse 20 der Hülse 14 und die Achse 22 des kreiszylindrischen Umformergehäuses 4 liegen. Diese Achsen schneiden sich beim dargestellten Ausführungsbeispiel unter einem Winkel von 90°, so dass dann, wenn der Druck-Messumformer 2 senkrecht ausgerichtet ist, die Hülse 14 waagerecht ausgerichtet ist und das nicht dargestellte Kabel waagrecht aus dem Anschlusskopf 6 herausgeführt wird. Die Achsen 20 und 22 können auch einen anderen Winkel als 90° einschließen, wobei dieser Winkel vorzugsweise im Bereich von 60° bis 120° liegt.

Das Gehäuse 6 umfasst einen kreisringförmigen Randabschnitt 24 und einen Gehäusekörper 26. Der Randabschnitt 24 umgibt eine insbesondere in Figur 2 erkennbare Deckelöffnung 28, deren freie Querschnittsfläche kreisförmig ist. Diese Öffnung wird als Deckelöffnung bezeichnet, da sie diejenige Öffnung des Gehäuses 6 ist, die mittels des Deckels 10 verschlossen werden kann und im in den Figuren 1 und 3 gezeigten Zustand mittels des Deckels 10 verschlossen ist.

Am in Figur 3 unten liegenden Boden des Gehäuses 8 ist in dessen Gehäusekörper 26 eine kreisrunde Anschlussöffnung 30 ausgebildet, die von dem am Gehäusekörper 26 angeformten Kragen 12 umgeben ist. An der Anschlussöffnung 20 ist das Gehäuse 8 mit dem Messgerät oder dem Messumformer verbindbar, wie dies in Figur 1 gezeigt ist. Die Achse 22 ist zugleich die Achse der Anschlussöffnung 30. Durch die Anschlussöffnung 30 können die nicht dargestellten elektrischen Leitungen des Messgerätes oder des Messumformers in das Innere des Gehäuses 8 geführt werden.

Auf der in Figur 3 linken Seite des Gehäuses 8 ist in dessen Gehäusekörper 26 eine kreisrunde Kabelöffnung 32 ausgebildet. Am Gehäusekörper 26 ist ein nach innerhalb des Gehäuses 8 vorstehender Hals oder Kragen 34 angeformt, der die Kabelöffnung 32 umgibt. In den Kragen 34 ist das eine Ende der Hülse 14 eingesetzt. Auf dieses Ende ist eine Mutter 36 geschraubt, mittels der die Hülse 14 am Gehäuse 8 befestigt ist. Alternativ oder zusätzlich kann die Hülse 14 dadurch am Gehäusekörper 26 befestigt sein, dass sie mit diesem entlang des Randes einer Schulter 38 der Hülse 14 verschweißt ist.

Innerhalb des Gehäuses 8 ist ein L-förmiger Leiterplattenträger 40 angeordnet. Dessen einer, in Figur 3 linker Schenkel ist am inneren Ende der Hülse 14 dadurch befestigt, dass er zwischen der Mutter 36 und dem Kragen 34 eingespannt ist. Der andere, in Figur 3 nach rechts verlaufende Schenkel des Leiterplattenträgers 40 trägt eine an ihm befestigte Leiterplatte 42, die oberhalb (in Figur 3) der Anschlussöffnung 30 angeordnet ist und quer zur Achse 22 der Anschlussöffnung 30 bzw. parallel zu deren Ebene verläuft. Auf der Leiterplatte 42 ist ein Klemmsockel 44 befestigt, der beim dargestellten Ausführungsbeispiel als 5-fach-Schraubklemme ausgebildet ist. Mittels des Klemmsockels 44 können die nicht dargestellten Leiter des ebenfalls nicht dargestellten, durch die Axialbohrung der Hülse 14 und somit indirekt durch die Kabelöffnung 32 geführten Kabels mit den nicht dargestellten elektrischen Leitungen verbunden werden, die vom Messgerät oder Messumformer aus durch die Anschlussöffnung 30 in das Innere des Gehäuses 6 geführt sind. Die letztgenannten Leitungen können beispielsweise verlötet werden mit auf der Leiterplatte 42 ausgebildeten Leiterbahnen, an die wiederum der Klemmsockel 44 elektrisch angeschlossen ist.

Der Gehäusekörper 26 des Gehäuses 8 hat außen im Wesentlichen die Form einer Kugelkappe, wie dies in den Figuren 1 bis 3 erkennbar ist. Der Begriff "Kugelkappe" wird hier in seiner mathematischen Bedeutung benutzt, der zufolge eine Kugelkappe, die auch als Kalotte bezeichnet werden kann, der zur Kugeloberfläche gehörende Teil eines Kugelabschnitts ist, wobei ein Kugelabschnitt dadurch entsteht, dass eine Kugel durch eine schneidende Ebene in zwei Teile zerlegt wird. Dies verdeutlicht Figur 6, in der eine Kugel mit dem Radius R gezeigt ist, die durch eine schneidende Ebene 46 in zwei Kugelabschnitte zerlegt ist, wobei die Oberfläche des in Figur 6 oberen Kugelabschnitts eine Kugelkappe 48 bildet. Als Höhe h der Kugelkappe 48 wird der Abstand desjenigen Punktes der Kugelkappe 48 von der schneidenden Ebene 46 bezeichnet, der am weitesten entfernt von der schneidenden Ebene 46 ist. Zu den Eigenschaften einer Kugelkappe gehört, dass deren Rand 50 stets ein Kreis ist.

Beim dargestellten Ausführungsbeispiel ist der Gehäusekörper 26 ein aus Metallblech tiefgezogenes Bauteil. Der Werkstoff des Gehäusekörpers 26 ist vorzugsweise ein korrosionsbeständiger Stahl. Die Ausbildung des Gehäusekörpers 26 als tiefgezogenes Bauteil hat die Vorteile, dass der Gehäusekörper bei geringem Materialaufwand und geringem Gewicht hohe Steifigkeit und hohe Festigkeit aufweist. Die am tiefgezogenen Gehäusekörper 26 angeformten Kragen 12 und 34 erhöhen die Festigkeit und Steifigkeit des Gehäusekörpers 26 zusätzlich.

In die vom kreisförmigen Rand der Kugelkappe umgebene Öffnung des Gehäusekörpers 26 ist der kreisringförmige Randabschnitt 24 des Gehäuses 8 eingesetzt. Der Randabschnitt 24 besteht aus einem Kunststoff und ist entlang seiner äußeren Umfangsfläche mit dem Gehäusekörper 26 verklebt. Auf der inneren Umfangsfläche des Randabschnitts 24 ist ein Innengewinde ausgebildet. Der Randabschnitt 24 umgibt und begrenzt die Deckelöffnung 28. Die Ebene der Deckelöffnung 28, die in Figur 3 als eine die Stirnseite des Randabschnitts 24 berührende Ebene 52 identifiziert ist, schließt mit der Achse 22 der Anschlussöffnung 30 einen spitzen Winkel α (siehe Figur 3) ein, der vorzugsweise im Bereich von 30° bis 60° liegt und beim dargestellten Ausführungsbeispiel einen Wert von 45° hat. Auf diese Weise ist die Deckelöffnung 28 "schräg" sowohl bezüglich der (Ebene der) Anschlussöffnung 30 als auch bezüglich der (Ebene der) Kabelöffnung 32 ausgerichtet. Dadurch ist das Innere des Gehäuses 8 für Montagearbeiten und für Überprüfungen gut zugänglich, und zwar sowohl von oben (in den Figuren 1 und 3) als auch von vorn (von rechts in den Figuren 1 und 3).

Wegen der kugelkappenförmigen Gestalt des Gehäusekörpers 26 hat das Gehäuse 8 insgesamt außen im Wesentlichen die Form einer Kugelkappe. Von der streng-mathematischen Kugelkappenform weist die äußere Form des Gehäuses 8 beim dargestellten Ausführungsbeispiel im Bereich der Anschlussöffnung 30 und der Kabelöffnung 32 ab. Ferner hat das Gehäuse 8 im Bereich seines Randabschnitts 24 einen Oberflächenabschnitt 54, der durch eine Kreiszylinderfläche gebildet ist. Dieser Oberflächenabschnitt 54 erstreckt sich senkrecht zur Ebene 52 der Deckelöffnung 28 nur über eine geringe Strecke, so dass er keine wesentliche Abweichung von der kugelkappenförmigen Gestalt des Gehäuses 8 verursacht.

Die radiale Dicke des Randabschnitts 24 ist gering und im Wesentlichen durch die erforderliche Festigkeit des Randabschnitts 34 bestimmt. Der Durchmesser der freien Querschnittsfläche der Deckelöffnung 28 ist daher nur um ein geringes Ausmaß kleiner als der Außendurchmesser des Gehäuses 8 im Bereich des Randabschnitts 24. Daher weist die Deckelöffnung 28 eine freie Querschnittsfläche auf, die annähernd so groß ist wie die vom Außenumfang des Randabschnitts 24 eingeschlossene Fläche. Dies bedeutet mit anderen Worten, dass die Deckelöffnung 28 bei gegebenen Außenabmessungen des Gehäuses 8 eine vergleichsweise große freie Querschnittsfläche hat.

Beim dargestellten Ausführungsbeispiel ist die Höhe der Kugelkappe gleich dem Radius der zugeordneten Kugel. Dies hat den Vorteil, dass die Deckelöffnung 28 einen maximalen Durchmesser bei zugleich großem Volumen des Innenraums des Gehäuses 8 hat.

Abweichend vom beschriebenen Ausführungsbeispiel kann der Randabschnitt des Gehäuses 8 einschließlich des am Randabschnitt ausgebildeten Gewindes einstückig mit dem Gehäusekörper ausgebildet sein.

Der Deckel 10 hat außen die Form eines Bechers mit einem Boden und einer im Wesentlichen kreiszylindrischen Seitenwand. Der Becher 10 umfasst ein äußeres Deckelteil 56, das beim dargestellten Ausführungsbeispiel durch ein aus Metallblech tiefgezogenes Tiefziehteil gebildet ist, das vorzugsweise aus demselben Werkstoff wie der Gehäusekörper 26 besteht. Ferner umfasst der Deckel 10 ein inneres Deckelteil 58, das aus Kunststoff gefertigt ist und in das äußere Deckelteil 56 eingesetzt ist. Zur festen Verbindung der beiden Deckelteile sind diese miteinander verklebt. Entsprechend seiner Becherform weist der Deckel einen Hohlraum 60 auf, in den der Klemmsockel 44 hineinragt, wie in Figur 3 gezeigt ist, und durch den zusätzlicher Einbauraum innerhalb des Anschlusskopfes 6 vorhanden ist.

Der Deckel 10 weist ferner einen kreisringförmigen Randabschnitt 62 auf, der am inneren Deckelteil 58 angeformt ist und an dem ein Außengewinde 64 ausgebildet ist. Der Randabschnitt 62 steht in Axialrichtung des becherförmigen Deckels 10 über den freien Rand des äußeren Deckelteils 56 vor und trägt eine O-Ringdichtung 66 (siehe Figur 5). Das Außengewinde 64 ist komplementär zum Innengewinde am Randabschnitt 24 des Gehäuses 8 ausgebildet, so dass der Randabschnitt 62 des Deckels 10 in den Randabschnitt 24 des Gehäuses 8 geschraubt werden kann, um auf diese Weise die Deckelöffnung 28 mittels des Deckels 10 zu schließen. Der Deckel 10 ist somit ein Schraubdeckel, und die lösbare Verbindung zwischen dem Deckel 10 und dem Gehäuse 8 ist eine durch das Innengewinde am Randabschnitt 24 und das Außengewinde 64 gebildete Schraub- bzw. Gewindeverbindung. Um das manuelle Aufschrauben des Deckels 10 auf das Gehäuse 8 und das manuelle Lösen des Deckels 10 vom Gehäuse 8 zu erleichtern, kann der Deckel 10 über seinen Umfang verteilte Griffmulden 68 aufweisen.

Wenn der Deckel 10 auf das Gehäuse 6 geschraubt ist, wie es in Figur 3 gezeigt ist, sorgt die O-Ringdichtung 66 für Abdichtung zwischen dem inneren Deckelteil 58 und dem Randabschnitt 24. Ein Abschnitt der äußeren Umfangsfläche des Randabschnitts 24 ist zwischen dem Gehäusekörper 26 und dem äußeren Deckelteil 56 angeordnet. Dieser Abschnitt der äußeren Umfangsfläche des Randabschnitts 24 und die äußeren Oberflächen des Gehäusekörpers 26 sowie des äußeren Deckelteils 56 gehen im Bereich des Randabschnitts 24 bündig ineinander über, wie dies in den Figuren 1 und 3 erkennbar ist, d.h. sie gehen ohne Stufen und Hinterschneidungen ineinander über. Der geschlossene Anschlusskopf 6 hat dadurch sowohl im Bereich des Randabschnitts 24 als auch insgesamt glatte Oberflächen. Nach außen vorstehende Ringflansche, die bei Anschlussköpfen gemäß dem Stand der Technik vorhanden sind, um den Deckel mit dem Gehäuse verbinden zu können, weist der beschriebene Anschlusskopf nicht auf. Der beschriebene Anschlusskopf hat eine vergleichsweise große Deckelöffnung und einen vergleichsweise großen Innenraum bei geringen Außenabmessungen. Der als Tiefziehteil ausgebildete Gehäusekörper 26 und das ebenfalls als Tiefziehteil ausgebildete äußere Deckelteil 56 verleihen dem Anschlusskopf bei geringem Gewicht und geringem Materialaufwand hohe mechanische Festigkeit und Steifigkeit.

In der im Wesentlichen kreiszylindrischen Seitenwand des inneren Deckelteils 58 ist eine Durchgangsbohrung 70 ausgebildet, die in einer Ausnehmung 72 auf der Außenseite des inneren Deckelteils 58 mündet (siehe Figur 5). Das äußere Deckelteil 56 überdeckt die Ausnehmung 72. Dabei ist die Ausnehmung 72 an ihrem dem Randabschnitt 62 zugewandten Ende zur Umgebung offen, wie dies in Figur 5 gezeigt ist. In der Ausnehmung 72 ist eine gasdurchlässige Membran 74 angeordnet, die die Mündung der Durchgangsbohrung 70 an der Ausnehmung 72 abdeckt. Durch die Ausnehmung 72, die Membran 74 und die Durchgangsbohrung 70 kann ein Druckausgleich zwischen dem Inneren des Anschlusskopfes 6 und der Umgebung erfolgen, wobei die Membran 74 das Eindringen von Verunreinigungen und gegebenenfalls Feuchtigkeit in das Innere des Anschlusskopfes 6 verhindert. Besonders vorteilhaft an der beschriebenen Ausbildung ist, dass das äußere Deckelteil 56 die Membran 54 überdeckt und dadurch vor Beschädigungen von außen schützt.

Wie vorstehend beschrieben ist, ist der Deckel 10 ein Schraubdeckel. Damit dieser, wenn er vom Gehäuse 8 gelöst ist, nicht verloren gehen kann, ist der Deckel 10 am Gehäuse 8 mittels eines Bandes 76 gesichert. Ein Ende des Bandes 76, das beispielsweise als Nylon-Monofilament ausgebildet sein kann, ist am Leiterplattenträger 40 befestigt, und das andere Ende des Bandes 76 ist am inneren Deckelteil 58 befestigt (siehe Figur 3). Die letztgenannte Befestigung erfolgt mittels eines Zapfens oder Bolzens 78 und einer auf dem Bolzen 78 drehbaren Öse 80, wobei der Bolzen 78 auf der Schraub- bzw. Drehachse des Deckels 10 angeordnet ist. Auf diese Weise kann der Deckel 10 um seine Schraub- bzw. Drehachse gedreht werden, ohne daran durch das Band 76 gehindert zu werden.

Die vorstehende Beschreibung bezieht sich auf ein bevorzugtes Ausführungsbeispiel des erfindungsgemäßen Anschlusskopfes, ohne dass durch diese Beschreibung die Erfindung auf bestimmte Einzelheiten des beschriebenen Ausführungsbeispiels beschränkt werden soll.

## Patentansprüche

1. Anschlusskopf für ein Messgerät oder einen Messumformer (2), mit einem Gehäuse (8), das eine Deckelöffnung (28) aufweist, einem Deckel (10), der zum Schließen der Deckelöffnung (28) dient und zu diesem Zweck mit dem Gehäuse (8) lösbar verbindbar ist, und einem innerhalb des Anschlusskopfes angeordneten Klemmsockel (44),
wobei das Gehäuse (8) ferner eine Anschlussöffnung (30), an der das Gehäuse (8) mit dem Messgerät oder dem Messumformer (2) verbindbar ist, und eine Kabelöffnung (32) aufweist, durch die ein elektrisches Kabel geführt werden kann, und wobei die Deckelöffnung (28) in einer Ebene (52) liegt, die mit der Achse (22) der Anschlussöffnung (30) einen spitzen Winkel (α) einschließt,
wobei das Gehäuse (8) im Wesentlichen die Form einer Kugelkappe (48) hat und ein dem Rand (50) der Kugelkappe (48) entsprechender Randabschnitt (24) des Gehäuses (8) die Deckelöffnung (28) begrenzt,
wobei an dem Randabschnitt (24) und entlang demselben ein Gewinde ausgebildet ist, und
wobei am Deckel (10) ein Gewinde (64) ausgebildet ist, das zu dem Gewinde an dem Randabschnitt (24) komplementär ist und mit diesem in Eingriff bringbar ist, um dadurch den Deckel (10) mit dem Gehäuse (8) lösbar zu verbinden,
**dadurch gekennzeichnet,**
**dass** das Gehäuse (8) durch einen aus Metallblech tiefgezogenen Gehäusekörper (26) und den Randabschnitt (24) gebildet ist, wobei der Randabschnitt (24) ein separat von dem Gehäusekörper (26) gefertigtes und mit dem Gehäusekörper (26) fest verbundenes Bauteil ist, und
**dass** der Deckel (10) ein äußeres Deckelteil (56), das durch ein aus Metallblech tiefgezogenes Tiefziehteil gebildet ist, und ein damit fest verbundenes inneres Deckelteil (58) aufweist, das innerhalb des äußeren Deckelteils (56) angeordnet ist und an dem das Gewinde (64) des Deckels (10) ausgebildet ist.

2. Anschlusskopf nach Anspruch 1, **dadurch gekennzeichnet, dass** das an dem Randabschnitt (24) ausgebildete Gewinde ein Innengewinde ist und dass das am Deckel (10) ausgebildete Gewinde ein Außengewinde (64) ist.

3. Anschlusskopf nach Anspruch 1 oder 2, **dadurch gekennzeichnet, dass** dann, wenn der Deckel (10) und das Gehäuse (8) lösbar miteinander verbunden sind, die äußere Oberfläche des Deckels (10) und die äußere Oberfläche des Gehäuses (8) im Bereich von dessen Randabschnitt (24) bündig ineinander übergehen.

4. Anschlusskopf nach einem der Ansprüche 1 bis 3, **dadurch gekennzeichnet, dass** die Höhe (h) der Kugelkappe (48) im Wesentlichen gleich dem Radius (R) der der Kugelkappe (48) zugeordneten Kugel ist.

5. Anschlusskopf nach einem der Ansprüche 1 bis 4, **dadurch gekennzeichnet, dass** die äußere Oberfläche des Gehäuses (8) im Bereich von dessen Randabschnitt (24) eine Kreiszylinderfläche ist.

6. Anschlusskopf nach einem der Ansprüche 1 bis 5, **dadurch gekennzeichnet, dass** der zwischen der Ebene (52) der Deckelöffnung (28) und der Achse (22) der Anschlussöffnung (30) eingeschlossene spitze Winkel (α) im Bereich von 30° bis 60° liegt.

7. Anschlusskopf nach Anspruch 6, **dadurch gekennzeichnet, dass** der zwischen der Ebene (52) der Deckelöffnung (28) und der Achse (22) der Anschlussöffnung (30) eingeschlossene spitze Winkel (α) einen Wert von 45° hat.

8. Anschlusskopf nach einem der Ansprüche 1 bis 7, **dadurch gekennzeichnet, dass** die Achse (20) der Kabelöffnung (32) und die Achse (22) der Anschlussöffnung (30) einen Winkel im Bereich von 60° bis 120° einschließen.

9. Anschlusskopf nach Anspruch 8, **dadurch gekennzeichnet, dass** die Achse (20) der Kabelöffnung (32) und die Achse (22) der Anschlussöffnung (30) einen Winkel von 90° einschließen.

10. Anschlusskopf nach Anspruch 8 oder 9, **dadurch gekennzeichnet, dass** sich die Achse (20) der Kabelöffnung (32) und die Achse (22) der Anschlussöffnung (30) schneiden.

11. Anschlusskopf nach einem der Ansprüche 1 bis 10, **dadurch gekennzeichnet, dass** der Randabschnitt (24) durch einen Ring aus Kunststoff gebildet ist, der in den Gehäusekörper (26) eingesetzt und mit diesem verklebt ist.

12. Anschlusskopf nach einem der Ansprüche 1 bis 11, **dadurch gekennzeichnet, dass** an dem Gehäusekörper (26) ein nach außerhalb des Gehäuses (8) vorstehender Kragen (12) angeformt ist, der die Anschlussöffnung (30) umgibt.

13. Anschlusskopf nach einem der Ansprüche 1 bis 12, **dadurch gekennzeichnet, dass** an dem Gehäusekörper (26) ein nach innerhalb des Gehäuses (8) vorstehender Kragen (34) angeformt ist, der die Kabelöffnung (32) umgibt.

14. Anschlusskopf nach Anspruch 13, **dadurch gekennzeichnet, dass** in den nach innerhalb des Gehäuses (8) vorstehenden Kragen (34) eine Hülse (14) eingesetzt ist, durch die eine Axialbohrung (16) verläuft, in der das elektrische Kabel abgedichtet fixiert werden kann.

15. Anschlusskopf nach einem der Ansprüche 1 bis 14, **dadurch gekennzeichnet, dass** innerhalb des Gehäuses (8) eine Leiterplatte (42), an der der Klemmsockel (44) befestigt ist, und ein Leiterplattenträger (40) angeordnet sind, der am Gehäuse (8) befestigt ist und die Leiterplatte (42) trägt.

16. Anschlusskopf nach Anspruch 15, **dadurch gekennzeichnet, dass** die Leiterplatte (42) quer zur Achse (22) der Anschlussöffnung (30) angeordnet ist.

17. Anschlusskopf nach den Ansprüchen 14 und 16, dadurch 15 gekennzeichnet, dass der Leiterplattenträger (40) ein L-förmiges Bauteil ist, dessen einer Schenkel am inneren Ende der Hülse (14) befestigt ist und dessen anderer Schenkel die Leiterplatte (42) trägt.

18. Anschlusskopf nach einem der Ansprüche 1 bis 17, **dadurch gekennzeichnet,**
**dass** das innere Deckelteil (58) aus einem Kunststoff besteht.

19. Anschlusskopf nach einem der Ansprüche 1 bis 18, **dadurch gekennzeichnet, dass** der Deckel (10) die Form eines Bechers mit einem Boden und einer im wesentlichen kreiszylindrischen Seitenwand hat.

20. Anschlusskopf nach einem der Ansprüche 1 bis 19, **dadurch gekennzeichnet, dass** das innere Deckelteil (58) eine Durchgangsbohrung (70) aufweist, die in einer Ausnehmung (72) auf der Außenseite des inneren Deckelteils (58) mündet, wobei die Mündung der Durchgangsbohrung (70) an der Ausnehmung (72) mittels einer gasdurchlässigen Membran (74) abgedeckt ist, wobei das äußere Deckelteil (56) die Ausnehmung (72) und die Membran (74) überdeckt und wobei die Ausnehmung (72) zur Umgebung offen ist.

21. Anschlusskopf nach einem der Ansprüche 1 bis 20, **gekennzeichnet durch** ein Band (76), dessen eines Ende am Deckel (10) und dessen anderes Ende am Gehäuse (8) befestigt ist und das **dadurch** den Deckel (10) am Gehäuse (8) sichert, wenn die Verbindung zwischen dem Deckel (10) und dem Gehäuse (8) mittels der zwei Gewinde gelöst ist.

## Claims

1. A connecting head for a measuring instrument or a measuring transducer (2), comprising a housing (8) which has a cover opening (28), a cover (10) which is used for closing the cover opening (28) and, for this purpose, is detachably connectable to the housing (8), and a plug-in socket (44) arranged inside the connecting head,
wherein the housing (8) further comprises a connecting port (30) at which the housing (8) is connectable to the measuring instrument or the measuring transducer (2), and a cable opening (32) through which an electrical cable can be conducted, and wherein the cover opening (28) is disposed in a plane (52) forming an acute angle (α) with the axis (22) of the connecting port (30),
wherein the housing (8) is basically shaped as a spherical cap (48) and an edge portion (24) of the housing (8) corresponding to the edge (50) of the spherical cap (48) defines the cover opening (28),
wherein a thread is formed on the edge portion (24) and along the same, and
wherein a thread (64) is formed on the cover (10) and is complementary to the thread on the edge portion (24) and is engageable with the same to thereby detachably connect the cover (10) to the housing (8),
**characterized in that**
the housing (8) is formed by a housing body (26) deep-drawn from sheet metal and by the edge portion (24), the edge portion (24) being component which is manufactured separately from the housing body (26) and is firmly connected to the housing body (26), and **in that**
the cover (10) comprises an external cover part (56) formed by a deep-drawn part (56) deep drawn from sheet metal and an internal cover part (58) firmly connected thereto, said internal cover part being arranged inside the external cover part (56) and having the thread (64) of the cover (10) formed thereon.

2. The connecting head according to claim 1, **characterized in that** the thread formed on the edge portion (24) is an internal thread and **in that** the thread formed on the cover (10) is an external thread (64).

3. The connecting head according to claim 1 or 2,
**characterized in that**, when the cover (10) and the housing (8) are detachably connected to each other, the external surface of the cover (10) and the external surface of the housing (8) merge flush into each other in the area of the edge portion (24) thereof.

4. The connecting head according to any one of claims 1 to 3, **characterized in that** the height (h) of the spherical cap (48) is basically equal to the radius (R) of the sphere assigned to the spherical cap (48).

5. The connecting head according to any one of claims 1 to 4, **characterized in that** the external surface of the housing (8) is a circular cylindrical surface in the area of the edge portion (24) thereof.

6. The connecting head according to any one of claims 1 to 5, **characterized in that** the acute angle (α) formed between the plane (52) of the cover opening (28) and the axis (22) of the connecting port (30) ranges from 30° to 60°.

7. The connecting head according to claim 6, **characterized in that** the acute angle (α) formed between the plane (52) of the cover opening (28) and the axis (22) of the connecting port (30) has a value of 45°.

8. The connecting head according to any one of claims 1 to 7, **characterized in that** the axis (20) of the cable opening (32) and the axis (22) of the connecting port (30) form an angle ranging from 60° to 120°.

9. The connecting head according to claim 8, **characterized in that** the axis (20) of the cable opening (32) and the axis (22) of the connecting port (30) form an angle of 90°.

10. The connecting head according to claim 8 or 9, **characterized in that** the axis (20) of the cable opening (32) and the axis (22) of the connecting port (30) intersect.

11. The connecting head according to any one of claims 1 to 10, **characterized in that** the edge portion (24) is formed by a ring made of plastic, said ring being inserted into the housing body (26) and being glued with the same.

12. The connecting head according to any one of claims 1 to 11, **characterized in that** a collar (12) projecting towards the outside of the housing (8) and surrounding the connecting port (30) is integrally shaped with the housing body (26).

13. The connecting head according to any one of claims 1 to 12, **characterized in that** a collar (34) projecting towards the inside of the housing (8) and surrounding the cable opening (32) is integrally shaped with the housing body (26).

14. The connecting head according to claim 13, **characterized in that** a sleeve (14) through which extends an axial bore (16) in which the electrical cable can be fixed in a sealed manner is inserted into the collar (34) projecting towards the inside of the housing (8).

15. The connecting head according to any one of claims 1 to 14, **characterized in that** a circuit board (42) to which the plug-in socket (44) is fastened and a circuit board support (40) are arranged inside the housing (8), said circuit board support being fastened to the housing (8) and supporting the circuit board (42).

16. The connecting head according to claim 15, **characterized in that** the circuit board (42) is arranged at right angles to the axis (22) of the connecting port (30).

17. The connecting head according to claims 14 and 16, **characterized in that** the circuit board support (40) is an L-shaped component whose one leg is fastened to the inner end of the sleeve (14) and whose other leg supports the circuit board (42).

18. The connecting head according to any one of claims 1 to 17, **characterized in that** the inner cover part (58) consists of a plastic.

19. The connecting head according to any one of claims 1 to 18, **characterized in that** the cover (10) has the shape of a cup having a bottom and a substantially circular cylindrical lateral wall.

20. The connecting head according to any one of claims 1 to 19, **characterized in that** the inner cover part (58) comprises a through bore (70) leading into a recess (72) on the external side of the inner cover part (58), wherein the mouth of the through bore (70) is covered at the recess (72) by means of a gas-permeable membrane (74), the external cover part (56) covering the recess (72) and the membrane (74) and the recess (72) being open towards the environment.

21. The connecting head according to any one of claims 1 to 20, **characterized by** a belt (76) whose one end is fastened to the cover (10) and whose other end is fastened to the housing (8), thereby securing the cover (10) to the housing (8) when the connection between the cover (10) and the housing (8) is released by means of the two threads.

## Revendications

1. Tête de raccordement pour un instrument de mesure ou un transducteur (2), avec un boîtier (8) comportant une ouverture pour couvercle (28), un couvercle (10) servant à la fermeture de l'ouverture pour couvercle (28) et raccordé de manière amovible au boîtier (8) à cet effet, et un socle de connexion (44) disposé à l'intérieur de la tête de raccordement,
le boîtier (8) comportant en outre une ouverture de connexion (30), sur laquelle le boîtier (8) peut être raccordé à l'instrument de mesure ou au transducteur (2), et une ouverture pour câble (32), où un câble électrique peut être inséré, et l'ouverture pour couvercle (28) étant située sur un plan (52) formant un angle aigu (α) avec l'axe (22) de l'ouverture de connexion (30),
le boîtier (8) ayant sensiblement la forme d'une calotte sphérique (48), un segment de bord (24) du boîtier (8) qui correspond au bord (50) de la calotte sphérique (48) délimitant l'ouverture pour couvercle (28),
un filet étant formé sur le segment de bord (24) et le long de ce dernier, et
un filet (64) étant réalisé sur le couvercle (10), complémentaire au filet sur le segment de bord (24) et engrenable avec celui-ci, pour raccorder ainsi de manière amovible le couvercle (10) au boîtier (8),
**caractérisée en ce que**
le boîtier (8) est constitué d'un corps de boîtier (26) en tôle métallique emboutie et du segment de bord (24), le segment de bord (24) étant un composant fabriqué séparément du corps de boîtier (26) et fixement raccordé au corps de boîtier (26), et
le couvercle (10) comporte une pièce de couvercle extérieure (56) formée par une pièce en tôle métallique emboutie, et une pièce de couvercle intérieure (58) qui lui est fixement raccordée, disposée à l'intérieur de la pièce de couvercle extérieure (56), et sur laquelle le filet (64) du couvercle (10) est réalisé.

2. Tête de raccordement selon la revendication 1, **caractérisée en ce que** le filet réalisé sur le segment de bord (24) est un filet femelle, et **en ce que** le filet réalisé sur le couvercle (10) est un filet mâle (64).

3. Tête de raccordement selon la revendication 1 ou 2, **caractérisée en ce que** la surface extérieure du couvercle (10) et la surface extérieure du boîtier (8) affleurent l'une à l'autre au niveau du segment de bord (24) du boîtier quand le couvercle (10) et le boîtier (8) sont raccordés l'un à l'autre de manière amovible.

4. Tête de raccordement selon l'une des revendications 1 à 3, **caractérisée en ce que** la hauteur (h) de la calotte sphérique (48) est sensiblement égale au rayon (R) de la sphère formée par la calotte sphérique (48).

5. Tête de raccordement selon l'une des revendications 1 à 4, **caractérisée en ce que** la surface extérieure du boîtier (8) est une surface cylindrique circulaire au niveau du segment de bord (24) de celui-ci.

6. Tête de raccordement selon l'une des revendications 1 à 5, **caractérisée en ce que** l'angle aigu (α) formé entre le plan (52) de l'ouverture pour couvercle (28) et l'axe (22) de l'ouverture de connexion (30) est compris entre 30° et 60°.

7. Tête de raccordement selon la revendication 6, **caractérisée en ce que** l'angle aigu (α) formé entre le plan (52) de l'ouverture pour couvercle (28) et l'axe (22) de l'ouverture de connexion (30) a une valeur de 45°.

8. Tête de raccordement selon l'une des revendications 1 à 7, **caractérisée en ce que** l'axe (20) de l'ouverture pour câble (32) et l'axe (22) de l'ouverture de connexion (30) forment un angle compris entre 60° et 120°.

9. Tête de raccordement selon la revendication 8, **caractérisée en ce que** l'axe (20) de l'ouverture pour câble (32) et l'axe (22) de l'ouverture de connexion (30) forment un angle de 90°.

10. Tête de raccordement selon la revendication 8 ou 9, **caractérisée en ce que** l'axe (20) de l'ouverture pour câble (32) et l'axe (22) de l'ouverture de connexion (30) se croisent.

11. Tête de raccordement selon l'une des revendications 1 à 10, **caractérisée en ce que** le segment de bord (24) est formé par une bague en matière synthétique mise en place dans le corps de boîtier (26) et collée à celui-ci.

12. Tête de raccordement selon l'une des revendications 1 à 11, **caractérisée en ce qu'**une collerette (12) saillante vers l'extérieur du boîtier (8) est formée sur le corps de boîtier (26), laquelle entoure l'ouverture de connexion (30).

13. Tête de raccordement selon l'une des revendications 1 à 12, **caractérisée en ce qu'**une collerette (34) saillante vers l'intérieur du boîtier (8) est formée sur le corps de boîtier (26), laquelle entoure l'ouverture pour câble (32).

14. Tête de raccordement selon la revendication 13, **caractérisée en ce qu'**un manchon (14) est mis en place dans la collerette (34) saillante vers l'intérieur du boîtier (8), au travers duquel s'étend un alésage axial (16) où le câble électrique peut être fixé de manière étanche.

15. Tête de raccordement selon l'une des revendications 1 à 14, **caractérisée en ce que** sont disposés à l'intérieur du boîtier (8) une plaquette imprimée (42) sur laquelle le socle de connexion (44) est fixé, et un support de plaquette imprimée (40) fixé contre le boîtier (8) et supportant la plaquette imprimée (42).

16. Tête de raccordement selon la revendication 15, **caractérisée en ce que** la plaquette imprimée (42) est disposée transversalement à l'axe (22) de l'ouverture de connexion (30).

17. Tête de raccordement selon les revendications 14 et 16, **caractérisée en ce que** le support de plaquette imprimée (40) est un composant en forme de L, dont une branche est fixée à l'extrémité intérieure du manchon (14) et dont l'autre branche supporte la plaquette imprimée (42).

18. Tête de raccordement selon l'une des revendications 1 à 17, **caractérisée en ce que** la pièce de couvercle intérieure (58) est en matière synthétique.

19. Tête de raccordement selon l'une des revendications 1 à 18, **caractérisée en ce que** le couvercle (10) a la forme d'un godet avec un fond et une paroi latérale sensiblement cylindrique circulaire.

20. Tête de raccordement selon l'une des revendications 1 à 19, **caractérisée en ce que** la pièce de couvercle intérieure (58) présente un alésage traversant (70) qui débouche dans un évidement (72) sur la face extérieure de la pièce de couvercle intérieure (58), le débouché de l'alésage traversant (70) sur l'évidement (72) étant couvert par une membrane (74) perméable aux gaz, la pièce de couvercle extérieure (56) recouvrant l'évidement (72) et la membrane (74) et l'évidement (72) étant ouvert sur l'environnement.

21. Tête de raccordement selon l'une des revendications 1 à 20, **caractérisée par** une bande (76), dont une extrémité est fixée sur le couvercle (10) et l'autre extrémité sur le boîtier (8), et qui fixe ainsi le couvercle (10) sur le boîtier (8) quand la connexion entre le couvercle (10) et le boîtier (8) est desserrée par les deux filets.
